# EUROPEAN PATENT SPECIFICATION

(11) **EP 1 454 148 B1**
(45) Date of publication and mention of the grant of the patent: **22.02.2006**
(21) Application number: 02786250.7
(22) Date of filing: 09.12.2002
(51) Int. Cl.: G01P 13/00, G01P 5/02, G01B 11/26

(54) **FLOW MEASURING DEVICE AND METHOD**
STRÖMUNGSMESSEINRICHTUNG UND -VERFAHREN
PROCEDE ET DISPOSITIF SERVANT A MESURER UN DEBIT

(30) Priority: 11.12.2001 NO 20016045
(43) Date of publication of application: 08.09.2004
(73) Proprietor: Trondheim Maritime Instrumentering AS, 7041 Trondheim (NO)
(72) Inventor: KOLLSTAD, Tor, Einar, N-7014 Trondheim (NO)
(74) Representative: Olsson, Jan
(86) International application number: PCT/NO2002/000469
(87) International publication number: WO 2003/067265

(56) References cited:
- DE-A1- 3 939 573
- US-A- 4 631 958
- US-A- 4 788 869
- US-A- 5 361 633
- US-B1- 6 279 393
- DATABASE WPI Week 199807, Derwent Publications Ltd., London, GB; Class S02, AN 1998-066886, XP002978831 & JP 9 304 422 A (YOKOGAWA ELECTRIC CORP) 28 November 1997

## Description

The present invention relates to a device as stated in the introduction of claim 1, for measuring wind or fluid flow.

### Background of the invention

Various measuring devices for measuring wind and fluid flow are known. Some of these comprise rotors/propellers in motion. These can be exposed to accumulation of ice,' and can also be destroyed during extreme weather conditions. Moreover, the rotation over time results in wear of bearings. There are also measuring devices based on ultrasound, but during precipitation these are exposed to measuring errors.

US 5,059,789 describes an optical position and orientation sensor which determines degrees of freedom of an object. A two-dimensional Position Sensing Detector (PSD) is used.

A PSD is a sensor registering the position of a light beam on a so-called PSD-substratum. These are supplied in different variants as manufactured products, and a new and more accurate type, called NT-PSD, was patented by SiTek (1994). The chips are used to measure position, movement, vibration and angle, together with inspection of surfaces, spectral analyses etc (PSD - User's Manual, SiTek 1996): The PSD's are most often used in control systems for automatic production, for example to measure the positions of the different moving parts of an industrial robot.

### Object of the invention

The main object of the invention is to provide a measuring device for measuring wind or fluid flow, which is effective in all types of weather conditions, and consequently the device will not be affected by temperature, ice, dust and precipitation.

The measuring device should also be able to damp undesired oscillations that can occur by a step response or similar input signal.

The measuring device should also have a low energy consumption and should be made of long-lasting materials, that is materials which maintain their characteristics over a long time. Consequently, it is an object of the invention that the measuring device should exhibit longevity without substantial maintenance.

The measuring device can also comprise a radio transmitter, whereby the measured data can be sent to a meteorological station or another central location. In this way, the need for reading the measured data of the site of the measuring device will be eliminated.

### The invention

The present invention provides a measuring device achieving the above-mentioned objects. The invention is defined in claim 1, and preferred embodiments are defined in the dependent claims. More details of the invention will be described as an example in the following section.

### Example

An embodiment of the present invention will now be described by means of an example. In the example it is emphasized to provide a measuring device achieving the above-mentioned requirements, it will have good accuracy over a large measurement range, long and reliable operating time and low energy consumption. Selection of materials and components is made with regard to these requirements, but other considerations can apply. In this way, the measuring device can be adapted to the range of application with regard to construction and/or costs.

In the drawings:
Fig. 1 shows a perspective view of the measuring device, where the casing of the housing is shown partially transparent to enable the interior of the measuring device to be seen,
Fig. 2 shows a cross-sectional view of the fastening device fastening the sensing member to the housing, and
Fig. 3 shows a cross-sectional view of another fastening device.
A measuring device 1 comprises a housing 2 and a sensing member 3, where the sensing member 3 is guided into and fastened to the housing 2 by means of a fastening device 4. These main parts will be described in detail below.

The sensing member 3 preferably comprises a pole, and is preferably made of a strong and very light material. Examples of such materials can be carbon fibre, titan, etc. The weight of the sensing member 3 is of particular importance if the measuring device is to be used on board in ships, where it is desirable that measurements are not influenced by movements caused by waves etc. In the part of the sensing member 3 extending into the housing 2, a light source 5, such as a LED (Light Emitting Diode) is provided in a tubular part thereof. A lens 6 is arranged in the end of the sensing member 3, in front of the LED 5.

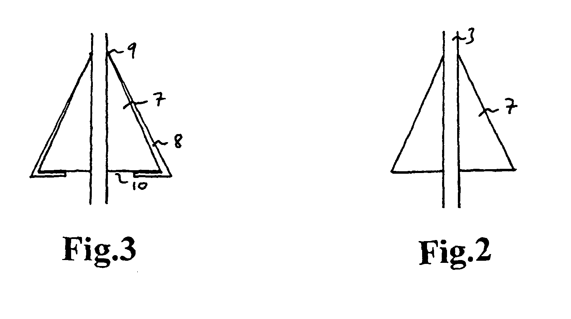

The fastening device 4 is shown in detail in fig. 2 and in its simplest embodiment it comprises a solid conical housing 7 arranged in the top of the housing 2, wherein it is formed an axial channel 14 for the sensing member 3 along the longitudinal axis of the cone 7. The fastening device is made of a material having elastic damping properties, such as silicone. The sensing member 3 is moulded into the fastening device, whereby humidity does not enter the housing 2 between the fastening device and sensing member 3.

A further embodiment of the fastening device 4 is shown in fig. 3. Unlike the above-mentioned embodiment there is provided a rigid supporting device 8 surrounding the side of, and partially surrounding the bottom of the conical housing 7. Around the circumference of the sensing member 3, directly above the top of the conical housing, the supporting device 8 is fastened to the sensing member 3. The fastening between the sensing member 3 and the supporting device 8 defines an origin of force 9 for the movement of the sensing member 3. In the bottom of the supporting device 8 there is cut an opening 10 having a diameter substantial larger than the hole in the conical housing, which prevents that the rigid supporting device from obstructing the movement of the sensing member 3 in the elastic conical housing 7.

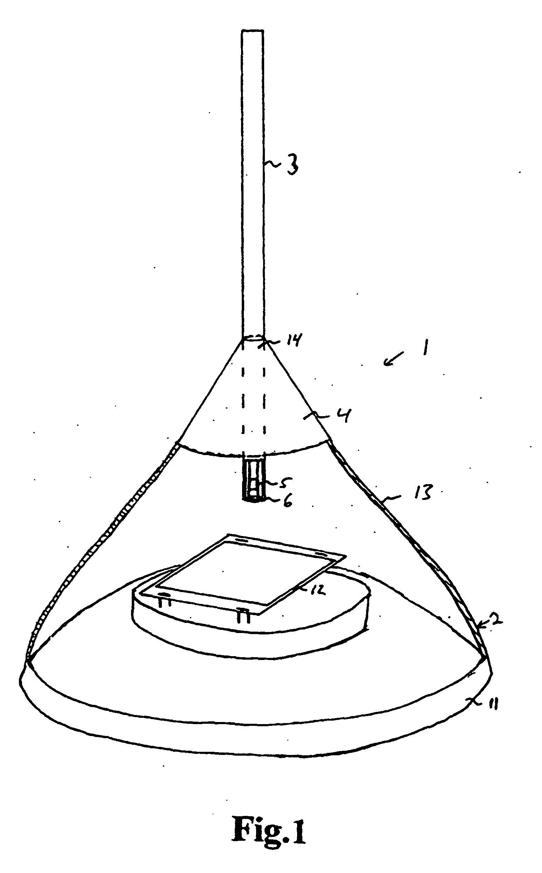

In the housing 2 there is arranged a base portion 11 (fig. 1) comprising a power supply, a micro controller and other necessary electronic components, as memory chips such as RAM, ROM etc.

In addition, there is arranged a radio transmitter in the base portion 11, to send the measuring results to a central unit, such as a meteorological station etc. Inside the housing 2 a PSD-chip 12 is arranged on top of the base portion 11, below the LED 5. An eventual selection of the lens 6 in front of the LED 5 decides the distance between the LED 5 and the PSD 12, to achieve a more accurately focused light beam onto the PSD substratum.

A rigid casing 13 encloses the PSD, and supports the fastening device 4 in relation to the base portion 11. The casing 13 is formed to achieve a favourable flow, such that the measurements are not influenced. The casing 13 preferably also surrounds fastening device 4 either entirely or partially. To prevent ice, dust and other particles adhering to the housing 2, thereby causing measure errors, the surface should be smooth. For example, the surface of the casing can be treated with Lotusan™ or other suitable means, so that dust and particles are washed off during rain. Electrical wires for power supply to the LED are also arranged through the fastening device 4 via a flexible coupling (not shown).

### Operation of the measuring device

The operation of the measuring device for wind according to the invention will be described in the following. Firstly, the measuring device is calibrated, that is different wind forces and wind directions are measured on the location of operation, both with the measuring device according to the invention an another known wind measuring device. The measurements are compared, and the micro controller is calibrated according to the results from the other measuring device. If the local geographical conditions do not affect the measurements, the wind force can be pre-calibrated, for example in a wind tunnel. The only on site adjustment is the orientation of the measuring device.

Wind flow applies a force to the sensing device 3, which makes it bend to one side. Consequently, the elastic fastening device 4 will be deformed due to the moment appearing in relation to the fastening device 4 or the origin of force 9. Accordingly, the light beam from the LED 5 on to the PSD 12 will move from the datum point (the point the light beam hits when input is zero). The PSD samples the measurements as x and y coordinates with high frequency, and out of every pair (x, y) the micro controller calculates the distance from the origin and orientation related to the datum point. By use of the stored calibration data, the micro controller calculates the wind force and the wind direction. The measured data is then transferred via the radio transmitter to a central meteorological collecting station, for example via the UHF band.

The same principle is used for measuring fluid flow, where the measuring device must be calibrated for this type of measurement and location of operation. The measuring device must be mounted in a way not affecting the measurements. If the measuring device is to be used to measure fluid flow in a pipe etc, the two-dimensional PSD can be replaced by a one-dimensional PSD.

### Modifications

The measuring device can have several other embodiments according to the end use, and the measurement requirements. In addition, the measuring device can have some other embodiments.

The LED can be placed everywhere in the sensing member 3. If desirable, the light beam from the LED can be transmitted via reflectors before it hits the PSD. Alternatively, the PSD could be arranged as a separate unit. In this case the LED will preferably be located in the other end of the sensing means 3 away from the house 2.

A self-calibrating measuring device can be achieved by a measuring device according to the invention equipped with an internal control device. The internal control device is preferably arranged inside the casing straight below the fastening device 4 The control device is controlled by the micro processor, and pushes or pulls the part of the sensing member 3 extending below the fastening device one or several known distances away from the origin, preferably in two different directions. The measuring device is calibrated by measuring the impact point of the light beam from the LED on to the PSD. Such self-calibrating preferably occurs when the input on the sensing means 3 from the outside is zero, in this way calibration will be as accurate as possible.

If the measuring device is to be located on a place exposed to cold temperatures, and the surface treatment of the sensing member 3 and the casing 13 is not sufficient to prevent ice formation, the sensing means 3 can be equipped with a heat-wire (not shown). The heat wire is preferably embedded or inwrought in the sensing means 3, and is supplied with power through the same flexible coupling as the power supply to the LED.

The sensing means 3 can have another shape if appropriate. When very small wind forces are to be measured accurately, it may be desirable to increase the surface of attack from the wind to the sensing means 3. This can be achieved by providing the sensing means 3 with a very lightweight ball on top. The ball may, for example, have an appropriate surface with regard to the wind, for example providing the ball with small hemispheric grooves in its surface, such as the surface of a golf ball.

In addition, the measuring device can be provided with other measuring apparatuses, for example temperature- and pressure measuring devices. Consequently, the measuring device can function as a complete weather station, which is able to send different types of weather observations to a central meteorological station. These other measuring devices can also be used to calibrate the measurements of wind flow or fluid flow, as the features of the materials and consequently the impact point of the light beam, can vary at different temperatures.

## Claims

1. Measuring device, preferably for measuring wind flow or fluid flow, comprising a poleshaped sensing means (3) protruding from housing (2) through a fastening device (4), where a focused light source (5) is located in one part of the sensing means (3) and the wind flow or fluid flow is measured as the hit point from the light source (5) in relation to a neutral hit point on a positioning sensing detector (12) connected to a data processing device calculating the wind flow or fluid flow from the measured data and calibration data, **characterised in that** the fastening device (4) comprises a substantially conical housing (7) made of an elastic material, where a channel (14) is arranged axially through the fastening device (4), the sensing means (3) being located in the channel (14) and protruding from both ends of the fastening device (4), so that when a force is applied on the sensing means (3), the elastic material is deformed and accordingly, the hit point of the light on the positioning sensing device (12) is changed.

2. Measuring device according to claim 1, **characterized in that** the fastening device (4) comprises a rigid supporting device (8) surrounding the side and partially surrounding the bottom of the conical housing (7), and where an opening (10) having a diameter substantial larger than the diameter of the channel (14).

3. Measuring device according to claim 2, **characterized in that** the supporting device (8) is secured to the sensing means (3), thereby providing an origin of force (9).

4. Measuring device according to any one of claims 1- 3, **characterized in that** the conical housing (7) is made of silicone.

## Patentansprüche

1. Messeinrichtung, vorzugsweise zur Messung von Wind oder Fluidströmungen, ein stangenförmiges Fühlerorgan (3) umfassend, das durch eine Befestigungsvorrichtung (4) hindurch aus einem Gehäuse (2) herausragt, wobei eine Quelle fokussierten Lichts (5) in einem Teil des Fühlerorgans (3) angeordnet ist und der Wind oder die Fluidströmung als Auftreffpunkt der Lichtquelle (5) relativ zu einem neutralen Auftreffpunkt auf einem Stellungsdetektor (12) gemessen wird, der an eine Datenverarbeitungseinrichtung angeschlossen ist, die aus den gemessenen Daten und Kalibrierungsdaten den Wind oder die Fluidströmung berechnet, **dadurch gekennzeichnet, dass** die Befestigungsvorrichtung. (4) ein im Wesentlichen konisches Gehäuse (7) aus elastischem Werkstoff umfasst, wobei ein Kanal (14) axial durch die Befestigungsvorrichtung (4) ausgebildet ist, während das Fühlerorgan (3) im Kanal (14) angeordnet ist und aus beiden Enden der Befestigungsvorrichtung (4) ragt, derart, dass der elastische Werkstoff bei Ausübung einer Kraft auf das Fühlerorgan (3) verformt und dementsprechend der Auftreffpunkt des Lichtes auf der die Stellung feststellenden Einrichtung (12) geändert wird.

2. Messeinrichtung nach Patentanspruch 1, **dadurch gekennzeichnet, dass** die Befestigungsvorrichtung (4) eine starre Halteeinrichtung (8) umfasst, die die Seite und teilweise den Boden des konischen Gehäuses (7) umgibt, und wo eine Öffnung (10) mit einem Durchmesser ausgebildet ist, der wesentlich größer ist, als der Durchmesser des Kanals (14).

3. Messeinrichtung nach Patentanspruch 2, **dadurch gekennzeichnet, dass** die Halteeinrichtung (8) am Fühlerorgan (3) befestigt ist, wodurch ein Kraftangriffspunkt (9) geschaffen wird.

4. Messeinrichtung nach irgendeinem der Patentansprüche 1 bis 3, **dadurch gekennzeichnet, dass** das konische Gehäuse (7) aus Silikon besteht.

## Revendications

1. Dispositif de mesure, de préférence pour mesurer le vent ou un écoulement fluidique, comprenant des moyens de détection (3) conformés en poteau, faisant saillie d'un boîtier (2) par l'intermédiaire d'un dispositif de fixation (4), dans lequel une source de lumière focalisée (5) est située dans une partie des moyens de détection (3) et le vent ou l'écoulement fluidique est mesuré en tant que point d'impact de la source de lumière (5) par rapport à un point d'impact neutre sur un détecteur de détection de position (12) relié à un dispositif de traitement de données calculant le vent ou l'écoulement fluidique à partir des données mesurées et de données d'étalonnage,
**caractérisé en ce que** le dispositif de fixation (4) comprend un boîtier sensiblement conique (7) réalisé en un matériau élastique, où un canal (14) est agencé axialement à travers le dispositif de fixation, les moyens de détection (3) étant situés dans le canal (14) et faisant saillie des deux extrémités du dispositif de fixation de sorte que, quand une force est appliquée sur les moyens de détection (3), le matériau élastique est déformé et, en conséquence, le point d'impact de la lumière sur le dispositif de détection de position (12) a changé.

2. Dispositif de mesure selon la revendication 1,
**caractérisé en ce que** le dispositif de fixation (4) comprend un dispositif de support rigide (8) entourant le côté et entourant partiellement le fond du boîtier conique (7), et où une ouverture (10) a un diamètre substantiel supérieur au diamètre du canal (14).

3. Dispositif de mesure selon la revendication 2,
**caractérisé en ce que** le dispositif de support (8) est fixé aux moyens de détection (3), en fournissant ainsi une origine de force (9).

4. Dispositif de mesure selon une quelconque des revendications 1-3,
**caractérisé en ce que** le boîtier conique (7) est réalisé en silicone.
